# EUROPÄISCHE PATENTSCHRIFT

(11) **EP 1 749 398 B1**
(45) Veröffentlichungstag und Bekanntmachung des Hinweises auf die Patenterteilung: **27.07.2011**
(21) Anmeldenummer: 05748177.2
(22) Anmeldetag: 28.04.2005
(51) Int. Cl.: H04M 3/42, H04Q 3/00

(54) **BEREITSTELLUNG EINER TELEKOMMUNIKATIONSVERBINDUNG ZWISCHEN ZWEI ENDGERÄTEN MIT ERMITTLUNG DES TELKOMMUNIKATIONSNETZES DES GERUFENEN TEILNEHMERS**
ESTABLISHING A TELECOMMUNICATION LINK BETWEEN TWO TERMINALS WHILE TRACING THE TELECOMMUNICATION NETWORK OF THE CALLED SUBSCRIBER
ETABLISSEMENT D'UNE LIAISON DE TELECOMMUNICATION ENTRE DEUX TERMINAUX AVEC DETERMINATION DU RESEAU DE TELECOMMUNICATION DE L'ABONNE APPELE

(30) Priorität: 30.04.2004 DE 102004021699
(43) Veröffentlichungstag der Anmeldung: 07.02.2007
(73) Patentinhaber: Teles AG Informationstechnologien, 10587 Berlin (DE)
(72) Erfinder: PAETSCH, Frank, 12357 Berlin (DE)
(74) Vertreter: Müller, Wolfram Hubertus
(86) Internationale Anmeldenummer: PCT/DE2005/000825
(87) Internationale Veröffentlichungsnummer: WO 2005/107227

(56) Entgegenhaltungen:
- EP-A- 1 239 651
- WO-A-01/03446
- US-B1- 6 192 115

## Beschreibung

Die Erfindung betrifft ein Verfahren zur Bereitstellung einer Telekommunikationsverbindung zwischen einem ersten, rufenden Endgerät und einem zweiten, gerufenen Endgerät und ein Telekommunikationsgerät zur Verwendung in einem solchen Verfahren.

### Hintergrund der Erfindung

Mit dem Begriff "Number Portability" wird eine Funktionalität beschrieben, die es einem Telekommunikationsteilnehmer erlaubt, "seine" Rufnummer bei einem Netzbetreiberwechsel mitzunehmen. Hatte der Teilnehmer beispielsweise bisher einen Mobilfunkvertrag mit der Deutsche Telekom AG, so begann seine Mobilfunknummer mit der Einwählnummer 0171, gefolgt von der eignen Rufnummer XXXXXXXX, so dass die Mobilfunknummer lautete: 0171XXXXXXXX. Bei einem Wechsel zu einem anderen Netzbereiber, beispielsweise E-Plus, musste bisher eine völlig neue Nummer vergeben werden. "Number Portability" erlaubt es, die bisherige Nummer mitzunehmen. Dabei bleibt neben der eigentlichen Nummer XXXXXXXX auch die Vorwahl (im obigen Beispiel: 0171) verhalten.

Der Verbindungsaufbau zu einem Mobilfunkgerät mit solchen "portierten" Rufnummer verläuft aufgrund der unveränderten Vorwahl (0171) zunächst über den alten Netzbetreibers. Im Netz des alten Netzbereibers wird dann festgestellt, dass die gerufene Nummer inzwischen zu einem neuen Netz (im obigen Beispiel: dem Netz des Netzbetreibers E-Plus) gehört. Der Ruf wird dann vom Netz des alten Netzbetreibers an das Netz des neuen Netzbetreibers weitergeleitet.

Hierbei ergeben sich jedoch für den rufenden Teilnehmer bei Gesprächen zu portierten Rufnummern nicht mehr transparente und in der Regel auch erhöhte Verbindungsgebühren. Insbesondere kann der alte Netzbetreiber zusätzliche Gebühren für das Weiterleiten des Gesprächs an das Netz des neuen Netzbetreibers verlangen.

Auch im Bereich des internationalen Roamings entstehen leicht Situationen, in denen sich das gerufene Endgerät nicht in demjenigen Netz befindet, in dem es das rufende Endgerät vermutet, und dies zu zusätzlichen Kosten führt.

In der US 6,192,115 B1 wird ein Verfahren zur Bereitstellung einer Telekommunikatinsverbindung beschrieben, bei dem von einem rufenden Endgerät Informationen über das gerufene Endgerät von einer Datenbank abgerufen werden können. Dies können beispielsweise Informationen darüber sein, ob die aufzubauende Telekommunikationsverbindung eine lokale Verbindung oder eine zu bezahlende Verbindung sein würde.

### Aufgabe der Erfindung

Der vorliegenden Erfindung liegt die Aufgabe zu Grunde, ein Verfahren und ein Telekommunikationsgerät zur Bereitstellung einer Telekommunikationsverbindung zwischen einem rufenden Endgerät und einem gerufenen Endgerät zur Verfügung zu stellen, die eine kostengünstige und für den Nutzer kostenmäßig transparente Telekommunikationsverbindung auch dann ermöglichen, wenn der gerufene Teilnehmer sich nicht in demjenigen Netz befindet, in dem der rufende Teilnehmer den gerufenen Teilnehmer vermutet.

### Zusammenfassung der Erfindung

Diese Aufgabe wird erfindungsgemäß durch ein Verfahren mit den Merkmalen des Anspruchs 1 und ein Telekommunikationsgerät mit den Merkmalen des Anspruchs 17 gelöst. Bevorzugte und vorteilhafte Ausgestaltungen der Erfindung sind in den Unteransprüchen angegeben.

Danach zeichnet sich die erfindungsgemäße Lösung dadurch aus, dass bei dem Aufbau einer Verbindung zu dem gerufenen Endgerät Signalisierungsinformationen des aktuellen Telekommunikationsnetzes des gerufenen Endgeräts betreffend den Rufaufbau ausgewertet werden. Dabei wird anhand dieser Signalisierungsinformationen das aktuelle Telekommunikationsnetzes des gerufenen Endgeräts bestimmt. Diese Information wird dann für den weiteren Rufaufbau, wozu ggf. auch ein Rufabbau gehört, genutzt, und zwar vor einem Durchschalten des Rufes zum gerufenen Endgerät.

Die Erfindung zeichnet sich somit durch den Gedanken aus, das Netz des gerufenen Teilnehmers anhand von Signalisierungsinformationen dieses aktuellen Netzes zu bestimmen und diese Informationen vor einer Terminierung des Rufes in kostengünstiger Weise zu nutzen.

Die vorliegende Erfindung ermöglichst es, über die Auswertung der Signalisierungsinformationen, die in einem Telekommunikationsnetz genutzt werden, die Identität eines Netzes festzustellen. Diese Information wird von den Netzbetreibern nicht bereitgestellt und ist nicht direkt verfügbar.

Es werden die Information betreffend die Identität des aktuellen Telekommunikationsnetzes des gerufenen Endgeräts in einer bevorzugten Ausgestaltung dazu genutzt, ein alternatives Routing der Verbindung zum gerufenen Endgerät zu realisieren. Dabei liegt in der Regel die Situation vor, dass das gerufene Endgerät sich in einem anderen Telekommunikationsnetz befindet als beim Rufaufbau angenommen. Die Information betreffend die Identität des aktuellen Telekommunikationsnetzes wird dann dazu genutzt, die Verbindung direkt über das aktuelle Telekommunikationsnetz des gerufenen Endgeräts zu diesem zu terminieren, also nicht den kostenintensiven Umweg über das Netz zu gehen, über den der Verbindungsaufbau zunächst erfolgte, in dem sich das gerufene Endgerät jedoch nicht (mehr) befindet.

Beispielsweise besitzt das gerufene Endgerät eine portierte Rufnummer, die aufgrund ihrer Vorwahl einem anderen Telekommunikationsnetz zugeordnet ist als dem aktuellen Telekommunikationsnetz des gerufenen Endgeräts.

In einem anderen Beispiel ist das gerufene Endgerät aktuell in einem ausländischen Telekommunikationsnetz angeordnet. Es werden dann die Information betreffend die Identität des aktuellen Telekommunikationsnetzes dazu genutzt, die Verbindung in alternativer, kostengünstigerer Weise in das aktuelle ausländischen Telekommunikationsnetz zu terminieren, z.B. eine Verbindung direkt über das ausländische Telekommunikationsnetz aufzubauen.

In einer weiteren bevorzugten Ausgestaltung wird die Information betreffend die Identität des aktuellen Telekommunikationsnetzes dazu genutzt, dem Nutzer zusätzliche Optionen zum Rufaufbau anzubieten. Solche Optionen können sein: die Option des Abbruchs des Rufaufbau oder die Option eines alternativen Routens der Telekommunikationsverbindung. Besonders vorteilhaft ist es, wenn die jeweiligen Optionen dem Nutzer bzw. am rufenden Endgerät zusammen mit den Kosten der Optionen optisch oder akustisch angezeigt werden.

Die ausgewerteten Signalisierungsinformationen des aktuellen Telekommunikationsnetzes können sowohl Inband-Signalisierungen als auch Außenband-Signalisierungen betreffen. Ein Beispiel für eine Auswertung einer Inband-Signalisierung ist die Auswertung des Klingelzeichen und/oder Anklopfzeichens. So gibt es Länder, in denen die einzelnen Netze unterschiedliche Klingelzeichen und Anklopfzeichen aufweisen. Die Klingelzeichen und Anklopfzeichen können sich insbesondere durch die Tonfrequenz, die Tonabfolgen, die Tonlängen und die Tonabstände voneinander unterscheiden. Ein Beispiel für die Auswertung einer Außenband-Signalisierung ist die Auswertung von Facility-Nachrichten und/oder die Auswertung netztypischer Signalisierungsabläufe. Beispielsweise kommt in einem Netz A eine Nachricht X immer vor einer Nachricht Y, während es in einem anderen Netz B umgekehrt ist. Auch können die Netze einen netztypischen Aufbau bestimmer Informationen, wie etwa von Gebühreninformationen vorsehen.

In einer bevorzugten Ausgestaltung erfolgt die Bereitstellung einer Verbindung zwischen dem ersten Endgerät und dem zweiten Endgerät unter Verwendung eines Gateways, das mit einem ersten Telekommunikationsnetz verbunden ist und das Nutzkanäle eines ersten weiteren Telekommunikationsnetzes und Nutzkanäle mindestens eines zweiten weiteren Telekommunikationsnetzes verwaltet, von denen eines das aktuelle Telekommunikationsnetz des gerufenen Endgeräts darstellt, wobei zur Herstellung einer Verbindung zwischen dem rufenden Endgerät und dem gerufenen Endgerät:
a) Informationen betreffend einen Verbindungswunsch vom rufenden Endgerät zunächst zum Gateway geroutet werden,
b) das Gateway anhand der Signalisierungsinformationen des aktuellen Telekommunikationsnetzes feststellt, welchem Telekommunikationsnetz das gerufene Endgerät aktuell zugeordnet ist und
c) das Gateway einen Nutzkanal des entsprechenden Telekommunikationsnetzes für die Verbindung bereitstellt, wobei
d) die Verbindung direkt über das aktuelle Telekommunikationsnetz zu dem gerufenen Endgerät terminiert wird.

Dabei kann vorgesehen sein, dass das erste Telekommunikationsnetz ein Telekommunikations-Festnetz und die weiteren Telekommunikationsnetze Telekommunikations-Mobilfunknetze sind, wobei das Gateway für jeden Nutzkanal mindestens eine für ein Mobilfunknetz spezifische, mit einer Kennung versehene Einsteckkarte bereitstellt. Alternativ ist auch das erste Telekommunikationsnetz ein Mobilfunknetz.

Das erfindungsgemäße Telekommunikationsgerät ist bevorzugt ein Mobilfunk-Gateway und weist Mittel auf, die bei einem Rufaufbau zu einem gerufenen Endgerät Signalisierungsinformationen des aktuellen Telekommunikationsnetzes des gerufenen Endgeräts auswerten und anhand dieser Signalisierungsinformationen das aktuelle Telekommunikationsnetz des gerufenen Endgeräts bestimmen. Die Mittel sind bevorzugt durch eine Software realisiert, die die Signalisierungsinformationen des aktuellen Telekommunikationsnetzes erfasst und auswertet.

Des weiteren weist das erfindungsgemäße Telekommunikationsgerät bevorzugt Mittel zur Herstellung einer Verbindung zu einem gerufenen Endgerät direkt über das aktuelle Telekommunikationsnetz auf.

Die Mittel zur Herstellung einer Verbindung über das aktuelle Kommunikationsnetz umfassen bevorzugt Mittel zum Bereitstellen eines Nutzkanals des entsprechenden Kommunikationsnetzes für die gewünschte Verbindung. Die Mittel zum Bereitstellen eines Nutzkanals umfassen bevorzugt eine mit einer Kennung versehene Einsteckkarte, insbesondere eine SIM-Karte, wobei jedem Nutzkanal mindestens eine für ein Mobilfunknetz spezifische Einsteckkarte zugeordnet ist.

Mit Vorteil weist das Mobilfunk-Gateway Mittel aufweist, die Informationen generieren und an das rufende Endgerät übersenden, die Optionen für den weiteren Rufaufbau darstellen. Beispielsweise wird einem Nutzer angeboten, den Rufaufbau zu beenden oder ein alternatives Routing vorzunehmen.

### Beschreibung mehrerer Ausführungsbeispiele

Die Erfindung wird nachfolgend unter Bezugnahme auf die Figuren der Zeichnung anhand mehrerer Ausführungsbeispiele näher erläutert. Es zeigen:
- Figur 1 -: eine Telekommunikationsanordnung mit einem Telekommmunikations-Festnetz und einem daran angeschlossenen Mobilfunk-Gateway;
- Figur 2 -: schematisch den Aufbau eines Mobilfunk-Gateways gemäß Figur 1;
- Figur 3 -: schematisch den Aufbau einer Einsteckkarte eines Gateways gemäß Figur 2;
- Figur 4 -: die Ober- und Unterseite eines SIM-Karteneinschubs einer Einsteckkarte gemäß Figur 3 und
- Figur 5 -: schematisch ein funktionelles Blockschaltbild eines Mobilfunk-Gateways.

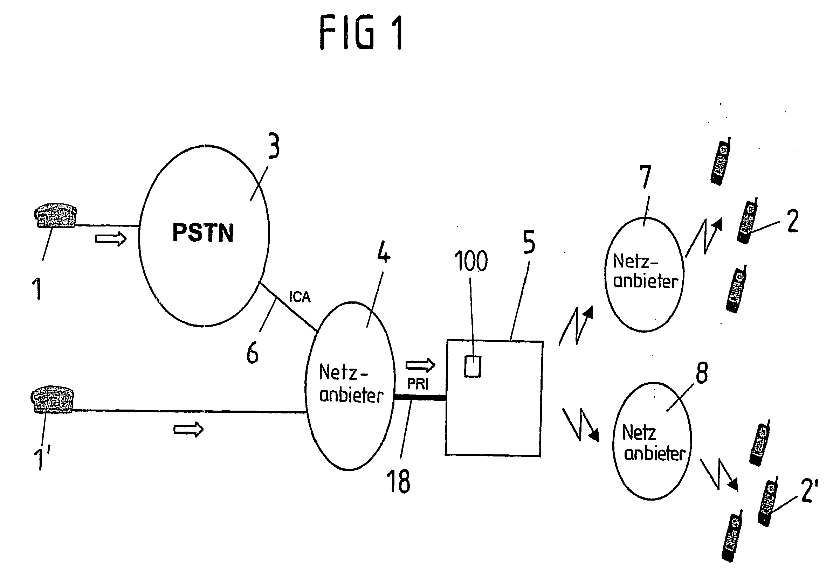

Figur 1 zeigt eine Telekommunikationsanordnung, die den Aufbau einer Verbindung zwischen einem rufenden Kommunikationsgerät 1, 1' eines ersten Kommunikationsnetzes und einem gerufenen Kommunikationsnetz 2, 2' eines weiteren Kommunikationsnetzes ermöglicht. Bei dem Kommunikationsgerät 1, 1' handelt es sich im dargestellten Ausführungsbeispiel um ein Telekommunikations-Endgerät (TK-Endgerät), beispielsweise ein Telefon oder einen Computer mit einer ISDN-Karte.

Ein TK-Endgerät 1, in Figur 1 beispielhaft als Telefon dargestellt, ist in an sich bekannter Weise über eine Ortsvermittlungsstelle (nicht dargestellt) mit einem leitungsvermittelten Telekommunikationsnetz 3 (PSTN-Netz - public switched telephony network) verbunden ist. Bei dem Telekommunikationsnetz 3 handelt es sich insbesondere um das Netz des ehemaligen Monopolisten, in Deutschland die Deutsche Telekom AG. Das Telekommunikationsnetz 3 ist über einen so genannten Interconnect-Anschluss ICA 6 mit dem Telekommunikationsnetz 4 eines weiteren, alternativen Netzanbieters verbunden. Die Zusammenschaltung von Kommunikationsnetzen über Interconnect-Anschlüsse ist an sich bekannt, so dass hierauf nicht weiter eingegangen wird. Für die Zusammenschaltung hat der Betreiber des Netzes 4 eine Zusammenschaltungsgebühr (Interconnect-Gebühr) an den Betreiber des Netzes 3 zu zahlen. Alternativ ist ein Endgerät entsprechend dem unteren, in Figur 1 dargestellten Endgerät 1' direkt an das Netz 4 eines alternativen Netzanbieters angeschlossen.

An das Netz 4 ist des weiteren ein Mobilfunk-Gateway 5 angeschlossen. Die Anbindung des Mobilfunk-Gateways 5 an das Netz 4 erfolgt beispielsweise durch mindestens einen Primary-Rate-Interface (PRI) Anschluß 18 des diensteintegrierten Netzes ISDN, der 30 B-Datenkanäle und einen D-Signalisierungskanal bereitstellt (E1-Leitung). Alternativ kann das Mobilfunk-Gateway 5 grundsätzlich auch direkt an das Netz 3 des ehemaligen Monopolisten angeschlossen sein.

Das Mobilfunkgateway 5 stellt einen Netzzugang zu einer Mehrzahl von Mobilfunknetzen 7, 8 bereit. Hierbei handelt es sich beispielsweise in Deutschland um die Netze D1, D2 und E-Plus. In Figur 1 sind beispielhaft zwei Netze 7, 8 dargestellt. Ein gerufenes Kommunikationsgerät eines solchen Mobilfunknetzes 7, 8 ist beispielsweise ein Mobilfunktelefon 2, 2', das über eine SIM-Karte individualisiert und dem entsprechenden Mobilfunknetz 7, 8 zugeordnet ist. Es kann somit über das jeweilige Mobilfunknetz 7, 8 eine Telekommunikationsverbindung zu einem Mobilfunktelefon 2, 2' aufgebaut werden kann.

Sofern nun ein Endgerät 1, 1' des Festnetzes 3, 4 eine Telekommunikationsverbindung, insbesondere eine Telefonverbindung zu einem Endgerät 2, 2' eines Mobilfunknetzes 7, 8 aufbauen will, wird der Verbindungswunsch über das Telekommunikationsnetz 3, 4, an das das rufende Endgerät 1, 1' angeschlossen ist, und ggf. unter Zwischenschaltung eines weiteren Telekommunikationsnetzes 4 an den Mobilfunk-Gateway 5 geleitet.

Wie nachfolgend noch erläutert, sind in das Mobilfunk-Gateway 5 eine Vielzahl von Mobilstationen integriert, die einen Zugang des Mobilfunk-Gateways 5 zu den einzelnen Mobilfunknetzen 7, 8 ermöglichen. Das Mobilfunk-Gateway 5 erkennt anhand der Vorwahlnummer des eingehenden Rufes das Mobilfunknetz, das dem gerufenen Endgerät 2, 2' zugeordnet ist. Zum Aufbau einer Verbindung zwischen dem rufenden Endgerät 1, 1' und dem gerufenen Endgerät 2, 2' stellt es einen Nutzkanal des entsprechenden - oder eines wie nachfolgend beschrieben ausgewählten - Mobilfunknetzes 7, 8 bereit. Das Mobilfunkgateway 5 dient dabei selbst als Mobilfunkgerät und ruft über das Mobilfunknetz, in dem sich das gerufenen Endgerät 2, 2' befindet, dieses an.

Der Ruf wird dann in an sich bekannter Weise über eine Sende-Empfangsstation BTS (BTS - Base-Transceiver-Station), eine zugehörige Steuerungseinrichtung und weitere Netzinfrastruktur des Mobilfunknetzes 7, 8 an das gerufene Endgerät 2, 2' geleitet.

Alternativ wäre es auch möglich, eine Verbindung in ein Mobilfunknetz 7, 8 über einen Übergabepunkt des Telekommunikationsnetzes 3 bereitzustellen. Solche Übergabepunkte, die den Ruf dann in das Mobilfunknetz weiterleiten, sind an sich bekannt und finden auch Verwendung. Nachteilig sind auf diese Weise aufgebaute Telekommunikationsverbindungen jedoch mit hohen Gebühren verbunden, die der Betreiber des Telekommunikationsnetzes 3 für die Rufweiterleitung in das Mobilfunknetz erhebt, wobei gegebenenfalls zusätzlich Inerconnect-Gebühren hinzukommen. Eine gemäß Figur 1 aufgebaute Verbindung zwischen einem rufenden Endgerät 1, 1' im Festnetz und einem gerufenen Endgerät 2, 2' eines Mobilfunknetzes zeichnet sich dagegen durch eine wesentlich günstigere Preisstruktur aus, da die Mobilfunkverbindung zwischen dem Gateway 5 mit dem gerufenen Endgerät 2, 2' sowie die Festnetzverbindung zwischen dem rufenden Endgerät 1, 1' und dem Mobilfunkgateway 5 vergleichsweise kostengünstig sind. Statt der Kosten für einen Anruf von Festnetz zu Mobil fallen die Kosten eines Anrufs von Mobil zu Mobil plus geringen Zusatzkosten für die Festnetzverbindung an.

Das oben beschriebene Verfahren ist an sich bekannt. Erfindungsgemäß erfolgt eine Abwandlung, um den Fall mit zu berücksichtigen, dass ein Ruf zu einem Endgerät mit einer portierten Rufnummer aufgebaut werden soll, die aufgrund ihrer Vorwahl einem anderen Telekommunikationsnetz zugeordnet ist als dem aktuellen Telekommunikationsnetz des gerufenen Endgeräts. Es können auch andere Gründe vorliegen, warum das rufende Endgerät sich nicht in dem Netz befindet, in dem das rufende Endgerät das gerufene Endgerät vermutet. Beispielsweise befindet sich das gerufene Endgerät in einem ausländischen Netz.

Das Mobilfunkgateway 5 weist eine schematisch dargestellte funktionelle Einheit 100 auf, die beispielsweise durch eine Software realisiert ist und die die Signalisierungsinformationen bzw. Steuerbefehle auswertet desjenigen Netzes, in dem sich der gerufene Teilnehmer aktuell befindet. Diese Signalisierungsinformationen werden an das rufende Endgerät übertragen und können dementsprechend von der Einheit 100 erfasst werden.

Anhand der Auswertung dieser Signalisierungsinformationen wird bei Vorliegen eines Verbindungswunsches geprüft, ob das gerufene Endgeräts 2, 2' sich in dem Netz 7, 8 befindet, in das der Ruf derzeit zunächst aufgebaut wird. Wenn dies der Fall ist, wird die Verbindung wie geplant aufgebaut. Wenn dies nicht der Fall ist, wird die Verbindung wird nun direkt über das aktuelle Telekommunikationsnetz des gerufenen Endgeräts 2, 2' zu diesem terminiert. Dazu stellt das Mobilfunk-Gateways 5 einen Nutzkanal des entsprechenden, aktuellen Mobilfunknetzes 7, 8 bereit.

Beispielsweise weist das gerufene Endgerät eine portierte Rufnummer auf. Die portierte Rufnummer lautet beispielsweise: 0161-11223344. Es handelt sich ursprünglich um eine Rufnummer des Netzes A. Der Nutzer hat nun den Provider gewechselt und seine Rufnummer mitgenommen. Anhand der Signalisierungsinformationen des neuen Netzes B erkannt das Mobilfunk-Gateway bzw. dessen Einheit 100, dass eine portierte Rufnummer vorliegt. Es wird nun direkt eine Verbindung in das neue Netz B mit der Einwählnummer beispielsweise 0167 vorgenommen, unter Verwendung einer SIM-Karte des Netzes B. Das Mobilfunk-Gateways 5 stellt einen Nutzkanal des Netzes B für die Verbindung zur Verfügung. Es wird die Nummer 0167-0161-11223344 auf diesem Kanal des Netzes B ausgesendet, wobei die "0167" grundsätzlich auch weggelassen werden kann. Die Ruf wird im aktuellen Netz B dem Endgerät mit der Rufnummer 0161-11223344 zugeordnet und direkt im aktuellen Netz terminiert.

Alternativ kann beispielsweise der Fall vorliegen, dass das gerufene Endgerät einem Netz zugeordnet ist, zu dem das Mobilfunk-Gateway über keine Nutzkanäle bzw. SIM-Karten verfügt. Der Ruf wird dann bevorzugt zunächst an ein anderes, zwischengeschaltetes Netz eines dritten Netzprobiders weitergeleitet, von dem dann eine Terminierung der Verbindung zum aktuellen Netz erfolgt. Dabei wird der kostengünstigste Weg ausgewählt. In einer weiteren Alternative wird in einem solchen Fall der Verbindungsaufbau abgebrochen, bevorzugt allerdings erst nach einer diesbezüglichen Rückfrage bei dem rufenden Teilnehmer.

Auch können Signalisierungsinformationen an das rufende Endgerät 1 gesandt werden, etwa hinsichtlich der Tatsache, dass das gerufene Endgerät eine portierte Rufnummer besitzt, oder hinsichtlich der zu erwartenden Gebühren bei einer Terminierung der Verbindung.

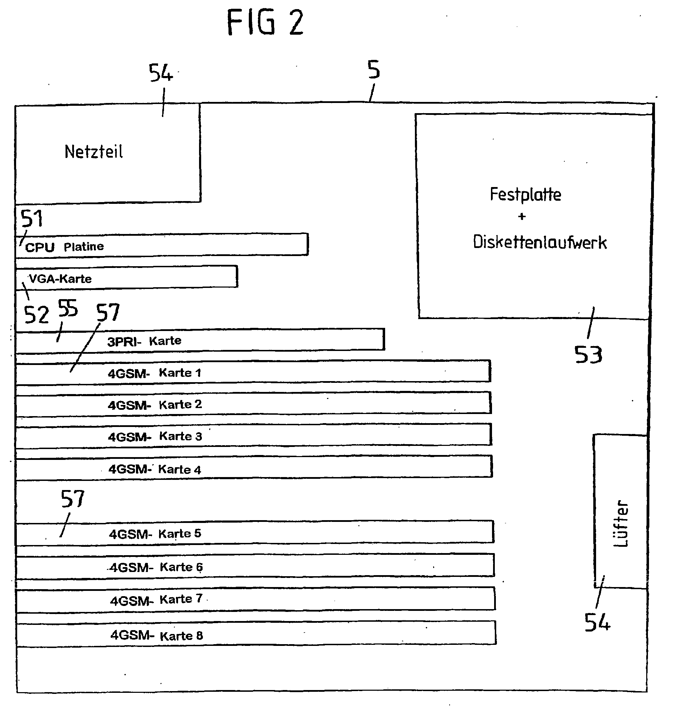

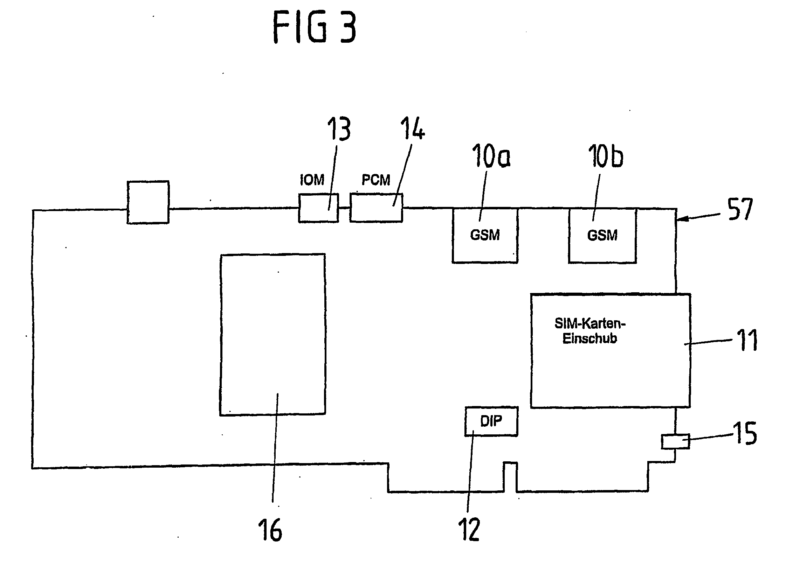

Die Figuren 2 und 3 zeigen im Einzelnen den Aufbau eines Mobilfunk-Gateways 5. Gemäß Figur 2 weist das Mobilfunk-Gateway eine zentrale Prozessoreinheit 51, eine Grafikkarte 52, Harddisk- und Floppy-Laufwerke 53, eine Stromversorgung 54 und einen Ventilator 55 auf. Eine Einsteckkarte 55 stellt drei PRI (E1)-Verbindungen zum Festnetz bereit, wobei auch eine andere Zahl von E1-Verbindungen vorgesehen sein kann. Die Einsteckkarte 55 stellt ein Koppelfeld zur Verfügung, über das eingehende Verbindungen jeweils einem Ausgang bzw. Nutzkanal zum Mobilfunknetz zugeordnet werden. Alternativ wird das Koppelnetz durch eine entsprechende Software der zentralen Prozessoreinheit 51 bereitgestellt.

Des weiteren weist das Mobilfunk-Gateway 5 eine Vielzahl von Einsteckkarten 57 für den Mobilfunk auf, die jeweils eine Vielzahl von Mobilstationen bereitstellen, im dargestellten Ausführungsbeispiel jeweils vier Mobilstationen. Gemäß dem vorherrschenden Standard im Mobilfunkbereich handelt es sich um GSM-Mobilstationen (GSM - Global System for Mobile Communication).

Auf der zentralen Prozessoreinheit 51 ist eine Software installiert, die aus Signalisierungsinformationen des Netzes des gerufenen Teilnehmers dessen Identität feststellt.

Eine Einsteckkarte 57 für den Mobilfunk ist in Figur 3 näher dargestellt. Die Einsteckkarte 57 weist auf der Vorder- und Rückseite jeweils zwei GSM-Module 10a, 10b auf, wobei die Figur 3 nur die auf der Oberseite dargestellten GSM-Module 10a, 10b zeigt. Jedes GSM-Modul 10a, 10b, das lediglich schematisch dargestellt ist, weist die Funktionalität eines Mobilgerätes eines Mobilfunknetzes auf. Jedem GSM-Modul 10, 10b sind mehrere SIM-Karten zogeordnet, wobei zu einem bestimmten Zeitpunkt immer nur eine SIM-Karte aktiviert ist. Die SIM-Karten sind auf einem SIM-Karteneinschub 11 angeordnet. Ein GSM-Modul 10a, 10b und eine SIM-Karte bilden jeweils eine Mobilstation eines Mobilfunknetzes aus.

Die Adresse der Einsteckkarte 57 ist über ein DIP-Feld 12 einstellbar. Ein Anschluss an ein internes Koppelfeld des Gateways 5 erfolgt über einen PCM-Bus 13 oder einen IOM-Bus 14. Eine Antenne 15 zum Aussenden oder Empfang von Funksignalen wird an der Rückseite der Karte angeschraubt. Die Einsteckkarte 57 verfügt des weiteren bevorzugt über einen eigenständigen Prozessor 16 mit Betriebssystem, der die einzelnen Module steuert. Alternativ erfolgt eine Steuerung ausschließlich über die zentrale prozessoreinheit.

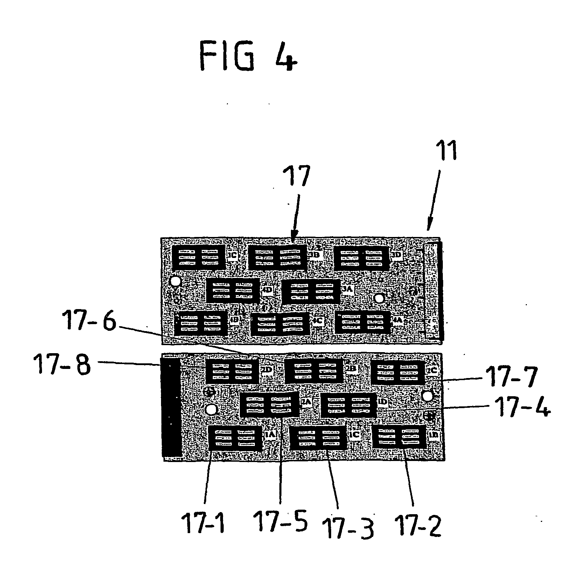

Figur 4 zeigt den SIM-Karteneinschub 11 der Figur 3 im Detail. Danach sind auf der Vorder- und Rückseite des Karteneinschubs 11 jeweils Aufnahmeplätze für acht SIM-Karten 17 vorgesehen, so dass insgesamt sechzehn SIM-Karten 17 vorgehalten werden können. Jedem GSM-Modul 10a, 10b sind dabei maximal vier SIM-Karten 17 zuordbar. Beispielsweise sind mit dem einen GSM-Modul 10a vier SIM-Karten 17-1, 17-2, 17-3, 17-4, dem GSM-Modul 10b vier Einsteckkarten 17-5, 17-6, 17-7, 17-8, etc. zugeordnet. Allerdings müssen nicht alle Aufnahmeplätze belegt sein.

Es verhält sich nun so, dass für eine konkrete Verbindung in ein Mobilfunknetz 7, 8 jeweils nur eine SIM-Karte 16 verwendet werden kann. Dabei wird jeweils eine solche SIM-Karte 16 aktiviert, die ein direktes Terminierten eines Rufs zu dem aktuellen Mobilfunknetz erlaubt.

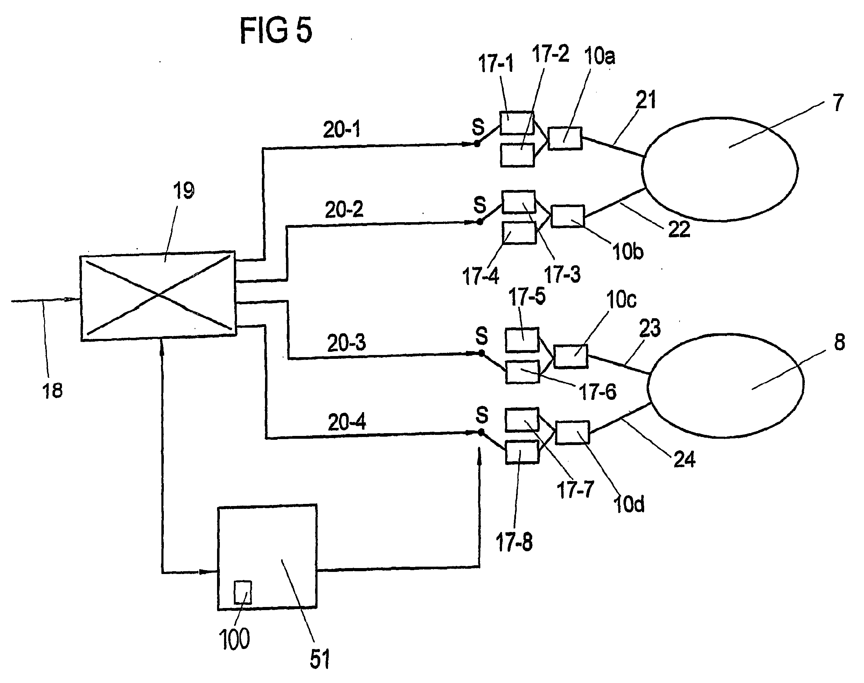

Figur 5 zeigt ein Koppelfeld 19, das beispielsweise in der Einsteckkarte 55 für eine PRI (E1)-Ankopplung gemäß Figur 2 implementiert ist. Das Koppelfeld 19 ist zum einen über einen PRI-Anschluß 18 gemäß Figur 1 an ein Festnetz angeschlossen. Die eingehenden, gemultiplexten Datenkanäle des PRI-Anschlusses 18 werden durch das Koppelnetz 19 auf eine Vielzahl von einzelnen Datenkanälen 20-1, 20-2, 20-3 und 20-4 verteilt. Dies wird über den zentralen Prozessor 51 des Gatesways 5 eine andere Steuereinheit gesteuert.

Zur einfacheren Darstellung sind in der Figur 5a nur vier GSM-Module 10a, 10b, 10c, 10d mit jeweils zwei SIM-Karten 17-1, 17-2, 17-3, 17-4, 17-5, 17-6, 17-7, 17-8 und zwei Mobilfunknetzen 7, 8 vorgesehen. Den Datenkanälen 20-1, 20-2, 20-3, 20-4 wird durch softwaregesteuerte Schalter S jeweils eine der SIM-Karten 17-1, 17-3, 17-6, 17-8 und damit ein bestimmtes Netz zugeordnet. Die Steuerung der Schalter S erfolgt mittels des zentralen Prozessors 51 oder einer anderen Steuereinheit, unter Berücksichtigung der Zuordnung der schematische dargestellten Software 100, wie zuvor erläutert.

Über die GSM-Module 10a, 10b 10c, 10d wird für jeden Datenkanal 20-1, 20-2, 20-3, 20-4 jeweils ein Nutzkanal 21, 22, 23, 24 für eine direkte Mobilfunkübertragung zu dem gerufenen Endgerät bereitgestellt. Die Zuordnung eines Nutzkanals 21, 22, 23, 24 zu einem Mobilfunknetz 17, 18 erfolgt über die gewählte SIM-Karte und entsprechend dem Ergebnis der Auswertung der Signalisierungsinformationen des Netzes, in dem sich der gerufene Teilnehmer befindet, durch die Software 100.

## Patentansprüche

1. Verfahren zur Bereitstellung einer Telekommunikationsverbindung zwischen einem ersten, rufenden Endgerät (1, 1'), das in einem ersten Telekommunikationsnetz angeordnet ist, und einem zweiten, gerufenen Endgerät (2, 2'), das in einem aktuellen Telekommunikationsnetz angeordnet ist, wobei ein Rufaufbau zu dem gerufenen Endgerät (2, 2') erfolgt, **gekennzeichnet durch** die Schritte:
- Auswerten von Signalisierungsinformationen des aktuellen Telekommunikationsnetzes betreffend den Rufaufbau nach Beginn des Rufaufbaus,
- Bestimmen des aktuellen Telekommunikationsnetzes (7, 8) anhand dieser Signalisierungsinformationen, und
- Nutzen dieser Information für den weiteren Rufaufbau vor einem Durchschalten des Rufes zum gerufenen Endgerät (2, 2').

2. Verfahren nach Anspruch 1, **dadurch gekennzeichnet, dass** die Information betreffend die Identität des aktuellen Telekommunikationsnetzes (7, 8) dazu genutzt wird, ein alternatives Routing der Verbindung zum gerufenen Endgerät zu realisieren.

3. Verfahren nach Anspruch 2, **dadurch gekennzeichnet, dass** das gerufene Endgerät (2, 2') sich in einem anderen Telekommunikationsnetz befindet als beim Rufaufbau angenommen, wobei die Information betreffend die Identität des aktuellen Telekommunikationsnetzes dazu genutzt wird, die Verbindung direkt über das aktuelle Telekommunikationsnetz des gerufenen Endgeräts zu diesem zu terminieren.

4. Verfahren nach Anspruch 3, **dadurch gekennzeichnet, dass** das gerufene Endgerät (2, 2') eine portierte Rufnummer besitzt, die aufgrund ihrer Vorwahl einem anderen Telekommunikationsnetz zugeordnet ist als dem aktuellen Telekommunikationsnetz des gerufenen Endgeräts.

5. Verfahren nach Anspruch 2 oder 3, **dadurch gekennzeichnet, dass** das gerufene Endgerät (2, 2') aktuell in einem ausländischen Telekommunikationsnetz angeordnet ist, wobei die Information betreffend die Identität des aktuellen Telekommunikationsnetzes dazu genutzt wird, die Verbindung in alternativer, kostengünstigerer Weise in das aktuelle ausländischen Telekommunikationsnetz zu terminieren.

6. Verfahren nach Anspruch 1, **dadurch gekennzeichnet, dass** die Information betreffend die Identität des aktuellen Telekommunikationsnetzes (7, 8) dazu genutzt wird, dem Nutzer zusätzliche Optionen zum Rufaufbau anzubieten.

7. Verfahren nach Anspruch 6, **dadurch gekennzeichnet, dass** dem Nutzer die Option des Abbruchs des Rufaufbau angeboten wird.

8. Verfahren nach Anspruch 6 oder 7, **dadurch gekennzeichnet, dass** dem Nutzer die Option eines alternativen Routens der Telekommunikationsverbindung angeboten wird.

9. Verfahren nach mindestens einem der Ansprüche 6 bis 8, **dadurch gekennzeichnet, dass** die jeweiligen Optionen dem Nutzer zusammen mit den Kosten der Optionen optisch oder akustisch angezeigt werden.

10. Verfahren nach mindestens einem der vorangehenden Ansprüche, **dadurch gekennzeichnet, dass** die ausgewerteten Signalisierungsinformationen des aktuellen Telekommunikationsnetzes Inband-Signalisierungen betreffen.

11. Verfahren nach Anspruch 10, **dadurch gekennzeichnet, dass** als Signalisierungsinformation das Klingelzeichen des aktuellen Telekommunikationsnetzes ausgewertet wird.

12. Verfahren nach mindestens einem der vorangehenden Ansprüche, **dadurch gekennzeichnet, dass** die ausgewerteten Signalisierungsinformationen des aktuellen Telekommunikationsnetzes Außenband-Signalisierungen betreffen.

13. Verfahren nach Anspruch 12, **dadurch gekennzeichnet, dass** als Signalisierungsinformation Facility-Nachrichten und/oder netztypische Signalisierungsabläufe ausgewertet wird.

14. Verfahren nach mindestens einem der vorangehenden Ansprüche, **dadurch gekennzeichnet, dass** die Bereitstellung einer Verbindung zwischen dem ersten Endgerät (1, 1') und dem zweiten Endgerät (2, 2') unter Verwendung eines Gateways (5) erfolgt, das mit einem ersten Telekommunikationsnetz (3, 4) verbunden ist und das Nutzkanäle eines ersten weiteren Telekommunikationsnetzes (7) und Nutzkanäle mindestens eines zweiten weiteren Telekommunikationsnetzes (8) verwaltet, von denen eines das aktuelle Telekommunikationsnetz des gerufenen Endgeräts darstellt, wobei zur Herstellung einer Verbindung zwischen dem rufenden Endgerät und dem gerufenen Endgerät
- Informationen betreffend einen Verbindungswunsch vom rufenden Endgerät (1, 1') zunächst zum Gateway (5) geroutet werden,
- das Gateway (5) anhand der Signalisierungsinformationen des aktuellen Telekommunikationsnetzes feststellt, welchem Telekommunikationsnetz (7, 8) das gerufene Endgerät (2, 2') aktuell zugeordnet ist und
- das Gateway (5) einen Nutzkanal des entsprechenden Telekommunikationsnetzes (7, 8) für die Verbindung bereitstellt, wobei
- die Verbindung direkt über das aktuelle Telekommunikationsnetz (7, 8) zu dem gerufenen Endgerät (2, 2') terminiert wird.

15. Verfahren nach Anspruch 14, **dadurch gekennzeichnet, dass** das erste Telekommunikationsnetz ein Telekommunikations-Festnetz (3, 4) und die weiteren Telekommunikationsnetze Telekommunikations-Mobilfunknetze (7, 8) sind, wobei das Gateway (5) für jeden Nutzkanal mindestens eine für ein Mobilfunknetz (7, 8) spezifische, mit einer Kennung versehene Einsteckkarte bereitstellt.

16. Telekommunikationsgerät zur Verwendung in dem Verfahren nach Anspruch 1,
**gekennzeichnet durch**
Mittel (100), die bei einem Rufaufbau zu einem gerufenen Endgerät (2, 2') Signalisierungsinformationen des aktuellen Telekommunikationsnetzes (7, 8) des gerufenen Endgeräts (2, 2') auswerten und anhand dieser Signalisierungsinformationen das aktuelle Telekommunikationsnetz (7, 8) des gerufenen Endgeräts bestimmen.

17. Telekommunikationsgerät nach Anspruch 16, **gekennzeichnet durch** Mittel (10a, 10b) zur Herstellung einer Verbindung zu einem gerufenen Endgerät (2, 2') direkt über das aktuelle Telekommunikationsnetz (7, 8).

18. Telekommunikationsgerät nach Anspruch 17, **dadurch gekennzeichnet, dass** das Telekommunikationsgerät ein Mobilfunk-Gateway (5) ist, das mit einem ersten Telekommunikationsnetz (3, 4) verbindbar ist und das eine erste Gruppe von Nutzkanälen eines ersten weiteren Telekommunikationsnetzes (7) und mindestens eine zweite Gruppe von Nutzkanälen eines zweiten weiteren Telekommunikationsnetzes (8) verwaltet, wobei die Mittel (10a, 10b) zur Herstellung einer Verbindung über das aktuelle Kommunikationsnetz (7, 8) Mittel zum Bereitstellen eines Nutzkanals des entsprechenden Kommunikationsnetzes (7, 8) für die gewünschte Verbindung umfassen.

19. Telekommunikationsgerät nach Anspruch 18, **dadurch gekennzeichnet, dass** die Mittel zum Bereitstellen eines Nutzkanals eine mit einer Kennung versehene Einsteckkarte, insbesondere eine SIM-Karte umfassen, wobei jedem Nutzkanal mindestens eine für ein Mobilfunknetz (7, 8) spezifische Einsteckkarte zugeordnet ist.

20. Telekommunikationsgerät nach Anspruch 18 oder 19, **dadurch gekennzeichnet, dass** das Mobilfunk-Gateway Mittel aufweist, die Informationen generieren und an das rufende Endgerät übersenden, die Optionen für den weiteren Rufaufbau darstellen.

## Claims

1. A method for providing a telecommunication link between a first, calling terminal (1, 1') which is arranged in a first telecommunication network, and a second, called terminal (2, 2') which is arranged in a current telecommunication network, wherein a call setup to the called terminal (2, 2') is effected, **characterized by** the following steps:
- evaluating signaling information of the current telecommunication network relating to call setup after initiation of the call setup,
- determining the current telecommunication network (7, 8) by means of this signaling information, and
- using this information for the further call setup before switching the call through to the called terminal (2, 2').

2. The method as claimed in claim 1, **characterized in that** the information relating to the identity of the current telecommunication network (7, 8) is used for implementing alternative routing of the connection to the called terminal.

3. The method as claimed in claim 2, **characterized in that** the called terminal (2, 2') is located in another telecommunication network than was assumed during the call setup, wherein the information relating to the identity of the current telecommunication network is used for terminating the connection at the called terminal directly via the current telecommunication network of the called terminal.

4. The method as claimed in claim 3, **characterized in that** the called terminal (2, 2') has a ported directory number which, on the basis of its prefix, is allocated to another telecommunication network than the current telecommunication network of the called terminal.

5. The method as claimed in claim 2 or 3, **characterized in that** the called terminal (2, 2') is currently arranged in a foreign telecommunication network, the information relating to the identity of the current telecommunication network being used for terminating the connection at the current foreign telecommunication network in an alternative, more cost-effective manner.

6. The method as claimed in claim 1, **characterized in that** the information relating to the identity of the current telecommunication network (7, 8) is used for offering additional options relating to the call setup to the user.

7. The method as claimed in claim 6, **characterized in that** the option of aborting the call setup is offered to the user.

8. The method as claimed in claim 6 or 7, **characterized in that** the option of alternative routing of the telecommunication link is offered to the user.

9. The method as claimed in at least one of claims 6 to 8, **characterized in that** the respective options are indicated visually or audibly to the user, together with the costs of the options.

10. The method as claimed in at least one of the preceding claims, **characterized in that** the evaluated signaling information of the current telecommunication network relates to inband signaling.

11. The method as claimed in claim 10, **characterized in that** the bell signal of the current telecommunication network is evaluated as signaling information.

12. The method as claimed in at least one of the preceding claims, **characterized in that** the evaluated signaling information of the current telecommunication network relates to out-of-band signaling.

13. The method as claimed in claim 12, **characterized in that** facility messages and/or signaling sequences typical for the network are evaluated as signaling information.

14. The method as claimed in at least one of the preceding claims, **characterized in that** a connection between the first terminal (1, 1') and the second terminal (2, 2') is provided by using a gateway (5) which is connected to a first telecommunication network (3, 4) and which manages user information channels of a first further telecommunication network (7) and user information channels of at least one second further telecommunication network (8), one of which represents the current telecommunication network of the called terminal, wherein, for establishing a connection between the calling terminal and the called terminal,
- information relating to a connection request from the calling terminal (1, 1') is first routed to the gateway (5),
- the gateway (5) determines from the signaling information of the current telecommunication network to which telecommunication network (7, 8) the called terminal (2, 2') is currently allocated, and
- the gateway (5) provides a user information channel of the corresponding telecommunication network (7, 8) for the connection, wherein
- the connection is terminated at the called terminal (2, 2') directly via the current telecommunication network (7, 8).

15. The method as claimed in claim 14, **characterized in that** the first telecommunication network is a fixed telecommunication network (3, 4) and the further telecommunication networks are mobile radio telecommunication networks (7, 8), wherein the gateway (5) provides each user information channel with at least one plug-in card, provided with an identifier, specific for a mobile radio network (7, 8).

16. A telecommunication device for use in the method as claimed in claim 1, **characterized by**
means (100) which, in the case of a call setup to a called terminal (2, 2'), evaluate signaling information of the current telecommunication network (7, 8) of the called terminal (2, 2') and, from this signaling information, determine the current telecommunication network (7, 8) of the called terminal.

17. The telecommunication device as claimed in claim 16, **characterized by** means (10a, 10b) for establishing a connection to a called terminal (2, 2') directly via the current telecommunication network (7, 8).

18. The telecommunication device as claimed in claim 17, **characterized in that** the telecommunication device is a mobile radio gateway (5) which can be connected to a first telecommunication network (3, 4) and which manages a first group of user information channels of a first further telecommunication network (7) and at least one second group of user information channels of a second further telecommunication network (8), wherein the means (10a, 10b) for establishing a connection via the current communication network (7, 8) comprise means for providing a user information channel of the corresponding communication network (7, 8) for the desired connection.

19. The telecommunication device as claimed in claim 18, **characterized in that** the means for providing a user information channel comprise a plug-in card provided with an identifier, particularly a SIM card, wherein at least one specific plug-in card for a mobile radio network (7, 8) is allocated to each user information channel.

20. The telecommunication device as claimed in claim 18 or 19, **characterized in that** the mobile radio gateway has means which generate, and transmit to the calling terminal, information which represents options for the further call setup.

## Revendications

1. Procédé pour mettre à disposition une liaison de télécommunication entre un premier terminal appelant (1, 1'), qui est situé dans un premier réseau de télécommunication, et un deuxième terminal appelé (2, 2'), qui est situé dans le réseau de télécommunication actuel, sachant qu'un établissement d'appel au terminal appelé (2, 2') est effectué, **caractérisé par** les étapes consistant à :
- évaluer d'informations de signalisation du réseau de télécommunication actuel concernant l'établissement de l'appel après le début de l'établissement de l'appel,
- déterminer le réseau de télécommunication actuel (7, 8) à l'aide de ces informations de signalisation, et
- utiliser ces informations pour la suite de l'établissement de l'appel avant une connexion de l'appel au terminal appelé (2, 2').

2. Procédé selon la revendication 1, **caractérisé en ce que** l'information concernant l'identité du réseau de télécommunication actuel (7, 8) est employée pour réaliser une variante de routage pour la liaison au terminal appelé.

3. Procédé selon la revendication 2, **caractérisé en ce que** le terminal appelé (2, 2') se trouve dans un autre réseau de télécommunication que celui supposé lors de l'établissement d'appel, l'information concernant l'identité du réseau de télécommunication actuel étant employée pour connecter la liaison au terminal appelé directement par le réseau de télécommunication actuel du terminal appelé.

4. Procédé selon la revendication 3, **caractérisé en ce que** le terminal appelé (2, 2') possède un numéro d'appel porté, qui, en raison de son numéro de présélection, est associé à un réseau de télécommunication autre que le réseau de télécommunication actuel du terminal appelé.

5. Procédé selon la revendication 2 ou 3, **caractérisé en ce que** le terminal appelé (2, 2') est situé actuellement dans un réseau de télécommunication étranger, l'information concernant l'identité du réseau de télécommunication actuelle étant employée pour connecter la liaison d'une manière différente, meilleure marché dans le réseau de télécommunication étranger actuel.

6. Procédé selon la revendication 1, **caractérisé en ce que** l'information concernant l'identité du réseau de télécommunication actuel (7, 8) est employée pour proposer à l'utilisateur des options supplémentaires pour l'établissement de l'appel.

7. Procédé selon la revendication 6, **caractérisé en ce que** l'option d'interrompre l'établissement de l'appel est proposée à l'utilisateur.

8. Procédé selon la revendication 6 ou 7, **caractérisé en ce que** l'option d'une variante de routage pour la liaison de télécommunication est proposée à l'utilisateur.

9. Procédé selon au moins une des revendications 6 à 8, **caractérisé en ce que** les options respectives sont signalées acoustiquement ou optiquement à l'utilisateur conjointement avec les coûts des options.

10. Procédé selon au moins l'une quelconque des revendications précédentes, **caractérisé en ce que** les informations de signalisation évaluées du réseau de télécommunication actuel concernent des signalisations dans la bande.

11. Procédé selon la revendication 10, **caractérisé en ce que** le signal de sonnerie du réseau de télécommunication actuel est évalué en tant qu'information de signalisation.

12. Procédé selon au moins l'une quelconque des revendications précédentes, **caractérisé en ce que** les informations de signalisation évaluées du réseau de télécommunication actuel concernent des signalisations hors de la bande.

13. Procédé selon la revendication 12, **caractérisé en ce que** des messages d'installation et/ou des opérations de signalisation typiques au réseau sont évalués en tant qu'information de signalisation.

14. Procédé selon au moins l'une quelconque des revendications précédentes, **caractérisé en ce que** la mise à disposition d'une liaison entre le premier terminal (1, 1') et le deuxième terminal (2, 2') est effectué en employant une passerelle (5) qui est reliée à un premier réseau de télécommunication (3, 4) et qui gère des canaux utiles d'un premier autre réseau de télécommunication (7) et des canaux utiles d'au moins un deuxième autre réseau de télécommunication (8) dont l'un des réseaux représente le réseau de télécommunication actuel du terminal appelé, sachant que pour la réalisation d'une liaison entre le terminal appelant et le terminal appelé
- des informations concernant un souhait de liaison sont acheminées du terminal appelant (1, 1') d'abord à la passerelle (5),
- la passerelle (5) détermine à l'aide des informations de signalisation du réseau de télécommunication actuel le réseau de télécommunication (7, 8) auquel le terminal appelé (2, 2') est actuellement associé et
- la passerelle (5) met à disposition un canal utile du réseau de télécommunication correspondant (7, 8) pour la liaison, sachant que
- la liaison est établie directement au terminal appelé (2, 2') par le biais du réseau de télécommunication actuel (7, 8).

15. Procédé selon la revendication 14, **caractérisé en ce que** le premier réseau de télécommunication est un réseau de télécommunication du service fixe (3, 4) et les autres réseaux de télécommunication sont des réseaux de télécommunication du service mobile (7, 8), la passerelle (5) mettant à disposition pour chaque canal utile au moins une carte insérable spécifique à un réseau de télécommunication du service mobile (7, 8) et pourvue d'un identifiant.

16. Appareil de télécommunication à employer dans le procédé selon la revendication 1,
**caractérisé par**
des moyens (100) qui, lors d'un établissement d'appel à un terminal appelé (2, 2'), évaluent des informations de signalisation du réseau de télécommunication actuel (7, 8) du terminal appelé (2, 2') et déterminent à l'aide de ces informations de signalisation le réseau de télécommunication actuel (7, 8) du terminal appelé.

17. Appareil de télécommunication selon la revendication 16, **caractérisé par** des moyens (10a, 10b) permettant de réaliser directement une liaison à un terminal appelé (2, 2') par le biais du réseau de télécommunication actuel (7, 8).

18. Appareil de télécommunication selon la revendication 17, **caractérisé en ce que** l'appareil de télécommunication est une passerelle de télécommunication du service mobile (5) qui peut être reliée à un premier réseau de télécommunication (3, 4) et qui gère un premier groupe de canaux utiles d'un premier autre réseau de télécommunication (7) et au moins un deuxième groupe de canaux utiles d'un deuxième autre réseau de télécommunication (8), les moyens (10a, 10b) permettant de réaliser une liaison par le biais du réseau de communication actuel (7, 8) comportant des moyens permettant de mettre à disposition un canal utile du réseau de communication correspondant (7, 8) pour la liaison souhaitée.

19. Appareil de télécommunication selon la revendication 18, **caractérisé en ce que** les moyens permettant de mettre à disposition un canal utile comportent une carte insérable pourvue d'un identifiant, en particulier une carte SIM, au moins une carte insérable spécifique à un réseau de télécommunication du service mobile (7, 8) étant associée à chaque canal utile.

20. Appareil de télécommunication selon la revendication 18 ou 19, **caractérisé en ce que** la passerelle du réseau de télécommunication du service mobile comporte des moyens qui génèrent des informations et les transmettent au terminal appelant et qui représentent des options pour la suite de l'établissement de l'appel.
